# EUROPÄISCHE PATENTSCHRIFT

(11) **EP 1 000 327 B1**
(45) Veröffentlichungstag und Bekanntmachung des Hinweises auf die Patenterteilung: **14.11.2001**
(21) Anmeldenummer: 98948720.2
(22) Anmeldetag: 04.08.1998
(51) Int. Cl.: G01G 19/414, B60N 2/02

(54) **VORRICHTUNG UND VERFAHREN ZUM ERKENNEN DES GEWICHTS EINES GEGENSTANDES UND/ODER EINES INSASSEN AUF EINEM FAHRZEUGSITZ**
DEVICE AND METHOD FOR DETECTING THE WEIGHT OF AN OBJECT AND/OR THE WEIGHT OF A PASSENGER ON THE SEAT OF A MOTOR VEHICLE
PROCEDE ET DISPOSITIF POUR DETECTER LE POIDS D'UN OBJET ET/OU D'UN OCCUPANT SE TROUVANT SUR UN SIEGE DE VEHICULE

(30) Priorität: 08.08.1997 DE 19734508
(43) Veröffentlichungstag der Anmeldung: 17.05.2000
(73) Patentinhaber: SIEMENS AKTIENGESELLSCHAFT, 80333 München (DE); AlliedSignal Deutschland GmbH, 65479 Raunheim (DE); BSRS Restraint Systems GmbH, 63755 Alzenau (DE)
(72) Erfinder: BAUER, Hans-Peter, 93049 Regensburg (DE); HEITZER, Günter, D-93102 Pfatter (DE); SWART, Marten, D-93083 Obertraubling (DE); POPP, Peter, D-93049 Regensburg (DE); DANZ, Gerhard, D-97076 Regensburg (DE); ORIGLIO, Galtano, 65468 Trebur (DE); KIPPELT, Ulrich, D-63755 Alzenau (DE); FRISCH, Markus, D-92421 Schwandorf (DE)
(74) Vertreter: Zedlitz, Peter, Dipl.-Inf.
(86) Internationale Anmeldenummer: DE9802233
(87) Internationale Veröffentlichungsnummer: WO9908078

(56) Entgegenhaltungen:
- EP-A- 0 644 407
- EP-A- 0 730 992
- DE-A- 3 428 585
- DE-A- 4 442 841
- DE-A- 19 511 591
- PATENT ABSTRACTS OF JAPAN vol. 095, no. 011, 26. Dezember 1995 & JP 07 218326 A (NITTETSU HOKKAIDO SEIGYO SYST KK), 18. August 1995
- "WEIGHT SENSING FOR OCCUPANT RESTRAINT UTILIZING LOAD CELL TECHNOLOGIES" RESEARCH DISCLOSURE, Nr. 399, Juli 1997, Seite 442 XP000726567
- PATENT ABSTRACTS OF JAPAN vol. 014, no. 153 (P-1026), 23. März 1990 & JP 02 012407 A (OKUMA MACH WORKS LTD), 17. Januar 1990
- PATENT ABSTRACTS OF JAPAN vol. 013, no. 590 (P-984), 26. Dezember 1989 & JP 01 252983 A (KONICA CORP), 9. Oktober 1989
- PATENT ABSTRACTS OF JAPAN vol. 008, no. 265 (P-318), 5. Dezember 1984 & JP 59 135325 A (AIDA ENGINEERING KK), 3. August 1984

## Beschreibung

Die Erfindung betrifft eine Vorrichtung und ein Verfahren zum Erkennen des Gewichts eines Gegenstandes und/oder eines Insassen auf einem Fahrzeugsitz, sowie eine Steuervorrichtung für ein Insassenschützmittel.

Insassenschutzsysteme in Kraftfahrzeugen nach dem Stand der Technik weisen neben einer Aufprallerkennung auch eine Insassenpositionserkennung sowie eine Gewichtserkennung für Insassen oder Gegenstände auf dem Fahrzeugsitz auf. Durch Information über Position und Gewicht des Insassen oder z.B. eines Kindersitzes soll ein dosiertes, an den Insassen angepaßtes Aufblasen zugeordneter Airbags erreicht werden.

Eine bekannte Vorrichtung zur Gewichtserkennung für ein Kraftfahrzeug (DE 42 37 072 A1) umfaßt einen Foliendrucksensor in Form einer Matte, dessen elektrischer Widerstand mit zunehmendem Druck auf die Folienoberfläche abnimmt. Die Matte wird in die Sitzpolsterung des Fahrzeugsitzes eingebracht.

Aufgabe der Erfindung ist es, eine Gewichtserkennung für einen Gegenstand und/oder einen Insassen auf einem Fahrzeugsitz zu schaffen, die einen einfachen Aufbau aufweist.

Der die Vorrichtung betreffende Teil.der Erfindungsaufgabe wird durch die Merkmale des Anspruchs 1 gelöst.

Der das Verfahren betreffende Teil der Erfindungsaufgabe wird durch die Merkmale des Anspruchs 10 gelöst. Im Anspruch 9 ist die Steuervorrichtung angegeben.

Erfindungsgemäß ist die von einem für die Sitzverstellung vorgesehenen Elektromotor abgegebene Kraft zum Verstellen des Fahrzeugsitzes ein Maß für die durch den Elektromotor bewegte Gewichtskraft - im folgenden Gewicht. Dabei setzt sich das bewegte Gewicht aus dem Gewicht des Fahrzeugsitzes, der zu überwindenden Reibungskraft, und dem Gewicht eines Insassen auf dem Fahrzeugsitz oder eines auf dem Fahrzeugsitz angeordneten Gegenstandes zusammen. Zur Ermittlung der von dem Elektromotor abgegebenen Kraft ist ein Sensor vorgesehen, der eine Meßgröße aufnimmt, die abhängig ist von der von dem Elektromotor gelieferten Kraft und damit von dem vom Elektromotor bewegten Gewicht. Eine Steuer- und Auswerteschaltung leitet im folgenden aus der beim gesteuerten Verstellen des Fahrzeugsitzes aufgenommenen Meßgröße ein Gewichtsignal ab.

Vorzugsweise wird als Meßgröße der vom Elektromotor aufgenommene Strom, die Drehzahl des Elektromotors oder das Drehmoment des Elektromotors aufgenommen.

Zum gesteuerten Verstellen des Elektromotors steuert die Steuer- und Auswerteschaltung den Elektromotor dahingehend, daß der Elektromotor in Bewegung gesetzt wird. Es ist dabei nicht erforderlich, daß der Fahrzeugsitz auch für den Insassen spürbar in seiner Position verstellt wird. Vorzugsweise sollte der Elektromotor über seine Anlaufstromphase hinaus betrieben werden, um die jeweilige Meßgröße im eingeschwungenen Zustand aufnehmen zu können, wobei die Einschwingphase der Meßgröße bei Ein- oder Abschalten des Elektromotors bei ihrer Auswertung durch die Steuer- und Auswerteschaltung unberücksichtigt bleibt. Dazu reichen etwa fünf Umdrehungen des Elektromotors aus. Beim derart gesteuerten Verstellen des Fahrzeugsitzes wird vorzugsweise der von dem Elektromotor gezogene Strom durch die Steuer- und Auswerteschaltung aufgendmmen und ausgewertet.

Vorzugsweise bedient sich die Vorrichtung zum Erkennen des Gewichts eines Elektromotors für die Sitzhöhenverstellung. Alternativ kann jedoch auch ein Elektromotor für die Sitzlängsverstellung verwendet werden. In jedem Fall muß der Elektromotor den Fahrzeugsitz gegen das Gewicht des Insassen verstellen.

Vorzugsweise werden die bereits in einem Fahrzeugsitz zur Sitzpositionsverstellung angeordneten Elektromotoren zur Gewichtserkennung verwendet. In diesem Falle sind außer dem Sensor für die Stromaufnahme sowie der Steuer- und Auswerteschaltung keinerlei zusätzliche Bauteile zur Gewichtserkennung erforderlich. Insbesondere ist kein großflächiger und mit einem Eingriff in die Fahrzeugsitzstruktur verbundener Sensor erforderlich. Der Stromsensor und die Steuer- und Auswerteschaltung sind auf einfache Art und Weise an den Elektromotor im/am Fahrzeugsitz anschließbar, da bei einem elektrisch verstellbaren Fahrzeugsitz bereits mechanische und elektrische Schnittstellen für den Elektromotor im/am Fahrzeugsitz vorgesehen sind. Ferner kann die bereits existierende Ansteuerelektronik zum Verstellen des Fahrzeugsitzes auf einfache Art soft- oder hardwaremäßig um die Steuer- und Auswerteschaltung der Gewichtserkennung erweitert werden.

Weitere vorteilhafte Weiterbildungen der Erfindung sind durch die von Anspruch 1 und 10 abhängigen Unteransprüche gekennzeichnet. Mit Anspruch 9 wird eine Steuervorrichtung für ein Insassenschutzmittel eines Kraftfahrzeugs mit einer erfindungsgemäßen Vorrichtung zur Gewichtserkennung beansprucht.

Ausführungsbeispielen der Erfindung und ihrer Weiterbildungen werden anhand der Zeichnung näher erläutert. Es zeigen:
- Figur 1: einen Kraftfahrzeugsitz,
- Figur 2: ein Blockschaltbild der erfindungsgemäßen Vorrichtung,
- Figur 3: die zeitliche Stromaufnahme eines Elektromotors, der zum Verstellen eines Fahrzeugsitzes vorgesehen ist, bei unterschiedlichen auf dem Fahrzeugsitz angeordneten Gewichten,
- Figur 4: den zeitlichen Stromverlauf eines solchen Elektromotors bei einem Verstellen des Fahrzeugsitzes zunächst in eine Richtung, dann in die entgegengesetzte Richtung, bei unterschiedlichen auf dem Fahrzeugsitz angeordneten Gewichten, und
- Figur 5: ein Flußdiagramm für das erfindungsgemäße Verfahren.

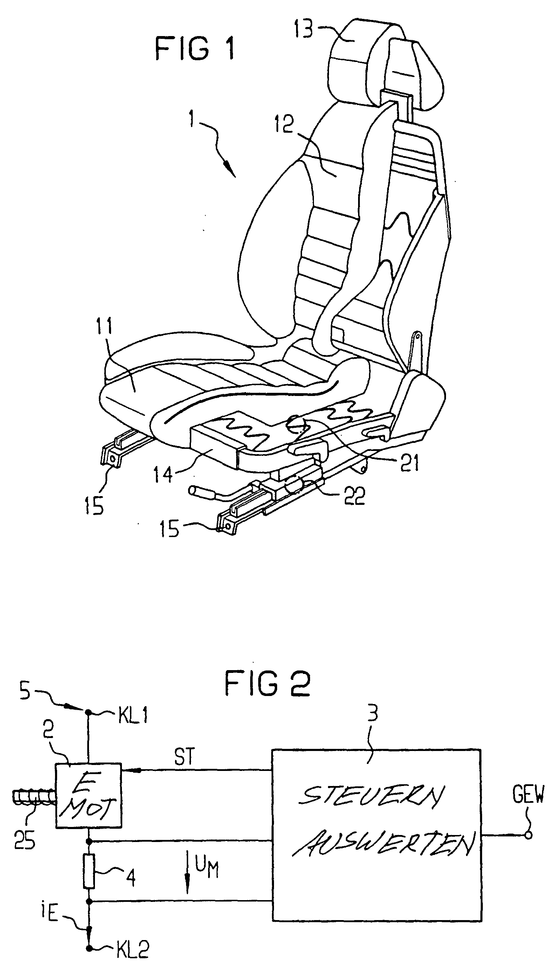

Ein typischer Fahrzeugsitz 1 gemäß Figur 1 weist ein Sitzpolster 11, eine Sitzlehne 12, eine Kopfstütze 13 und einen Sitzrahmen 14 auf. Der Fahrzeugsitz 1 ist verschiebbar gelagert auf Gleitschienen 15. Fahrzeugsitze lassen sich zunehmend nicht nur mechanisch betätigbar verstellen sondern auch elektrisch betätigbar. Symbolisch ist dazu in Figur 1 ein Elektromotor 21 für die Sitzhöhenverstellung eingezeichnet, sowie ein Elektromotor 22 für die Sitzlängsverstellung entlang der Gleitschienen 15. Durch Tastendruck steuert der Insasse die entsprechenden Elektromotoren 21, 22 an, so daß der Fahrzeugsitz derart gesteuert in die gewünschte Stellung verschoben wird.

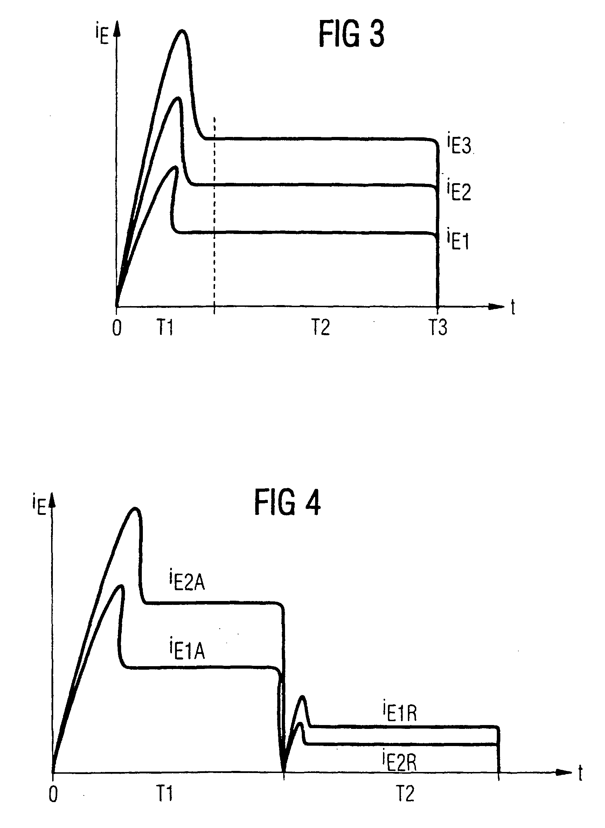

Figur 2 zeigt ein Blockschaltbild der erfindungsgemäßen Vorrichtung. Ein Elektromotor 2 mit seinem symbolisch eingezeichneten Rotor 25 dient zum Verstellen eines Kraftfahrzeugsitzes gemäß Figur 1. Er ist an Klemmen KL1 und KL2 einer Versorgungsenergiequelle 5 angeschlossen. Eine Steuer- und Auswerteschaltung 3 steuert über ein Steuersignal ST den Elektromotor 2. Ein Stromsensor 4 in Form eines Meßwiderstandes erfaßt den vom Elektromotor 2 aufgenommenen Strom i_{E}, wobei zur Ermittlung der Stromaufnahme die an dem Widerstand abfallende Meßspannung U_{M} von der Steuer- und Auswerteschaltung 3 aufgenommen wird. Anhand des aufgenommenen Stroms i_{E} gibt die Steuer- und Auswerteschaltung 3 ein Gewichtssignal GEW ab, das entweder proportional zum ermittelten Gewicht ist oder das bereits durch die Steuer- und Auswerteschaltung 3 klassifiziert wurde und für ein ermitteltes Gewicht in einem festgelegten Gewichtsintervall steht. Die Steuer- und Auswerteschaltung 3 ist vorzugsweise als Mikroprozessor ausgebildet, kann aber auch eine analoge Schaltung darstellen oder als sonstige Meß- und Steuerschaltung ausgebildet sein.

Figur 3 zeigt den zeitlichen Stromverlauf des beim gesteuerten Verstellen des Fahrzeugsitzes durch den Elektromotor 2 aufgenommenen Stroms i_{E}. Dabei ist bei dem aufgenommenen Stromverlauf i_{E1} kein Objekt/Insasse/Gewicht auf dem Fahrzeugsitz angeordnet, bei dem Stromverlauf i_{E2} ein geringes Gewicht und bei dem Stromverlauf i_{E3} ein größeres Gewicht. Allgemein ist jeder nach einem Ansteuern des Elektromotors 2 gemessene Stromverlauf i_{Ei} durch ein erstes Zeitintervall T1 für die Anlaufphase des Elektromotors 2 gekennzeichnet. Dabei ist ein Überschwingen im Stromverlauf i_{E} festzustellen. Nach der Anlaufphase ist der Stromverlauf i_{E} durch einen etwa konstanten, eingeschwungenen Betriebsstrom im Zeitintervall T2 gekennzeichnet. Zu diesen Zeitpunkten verstellt der Elektromotor 2 kontinuierlich den Fahrzeugsitz unter Aufnahme eines annähernd konstanten, eingeschwungenen Betriebsstromes, dessen Amplitude insbesondere gewichtsabhängig ist. Zum Zeitpunkt t3 gemäß Figur 3 wird beispielsweise das Verstellen des Fahrzeugsitzes durch ein entsprechendes Steuersignal ST abgebrochen. Damit ist das gesteuerte Verstellen zum Erkennen des Gewichts abgeschlossen. Der Elektromotor kann natürlich ohne weiteres weiterhin betrieben werden, um beispielsweise dem Wunsch des Insassen nach einem Verstellen des Fahrzeugsitzes gerecht zu werden.

Das gesteuerte Verstellen des Fahrzeugsitzes zur Gewichtserkennung wird vorzugsweise nach jeder Inbetriebnahme des Fahrzeugs, also nach Betätigung der Fahrzeugzündung veranlaßt, da zu diesem Zeitpunkt bereits davon ausgegangen werden kann, daß Insassen im Fahrzeug Platz genommen haben. Vorzugsweise wird in festgelegten Abständen bei Betrieb des Fahrzeugs die Messung zur Gewichtserkennung wiederholt, um Änderungen der auf einen Fahrzeugsitz einwirkenden Gewichtskraft feststellen zu können.

Die Steuer- und Auswerteschaltung 3 führt beispielsweise folgende Auswertung des aufgenommenen eingeschwungenen Betriebsstromes i_{E1} durch: Ein aufgrund einer Messung aufgenommener eingeschwungener Betriebsstrom, z.B. i_{E2}, wird mit einem abgespeicherten eingeschwungenen Betriebsstrom i_{E1} durch Differenzbildung verglichen. Der in einem EPROM der Steuer- und Auswerteschaltung 3 abgespeicherte Betriebsstromwert i_{E1} entspricht der Stromaufnahme des Elektromotors zum Verstellen eines nicht belegten Fahrzeugsitzes. Dieses Differenzsignal wird dann als Gewichtssignal GEW von der Steuer- und Auswerteschaltung 3 geliefert. Vorzugsweise kann dieses Differenzsignal in der Steuer- und Auswerteschaltung 3 weiter mit verschiedenen Schwellwerten verglichen werden, so daß als Ergebnis ein klassifiziertes Gewichtssignal GEW von der Steuer- und Auswerteschaltung 3 geliefert wird.

Vorzugsweise wird das Gewichtssignal GEW als Differenz zweier gemessener eingeschwungener Betriebsströme i_{Ei} gebildet:
Gemäß Figur 4 wird in einem ersten Zeitintervall T1 der Elektromotor 2 durch die Steuer- und Auswerteschaltung 3 derart gesteuert, daß der Fahrzeugsitz in eine erste vorgegebene Richtung verstellt wird. Die Stromaufnahme i_{E1A} kennzeichnet dabei den Stromverlauf bei nicht belegtem Fahrzeugsitz, der Strom i_{E2A} dagegen den Stomverlauf bei belegtem Fahrzeugsitz. In einem sich an das Zeitintervall T1 anschließenden Zeitintervall T2 wird veranlaßt durch die Steuer- und Auswerteschaltung 3 der Elektromotor 2 dahingehend gesteuert, daß er den Fahrzeugsitz in einer zur ersten Richtung entgegengesetzten Richtung verstellt. Wird beispielsweise im Zeitintervall T1 der Fahrzeugsitz über die elektromotorische Höhenverstellung angehoben, so wird er im Zeitintervall T2 wiederum abgesenkt. Der Strom i_{E1R} kennzeichnet dabei den Stromverlauf bei nicht belegtem Fahrzeugsitz, der Strom i_{E2R} dagegen den Stromverlauf bei belegtem Fahrzeugsitz. Ist zum Anheben eines belegten Fahrzeugsitzes eine größere Stromaufnahme durch den Elektromotor erforderlich als bei unbelegtem Fahrzeugsitz, so ist beim Absenken des belegten Fahrzeugsitzes eine geringere Stromaufnahme erforderlich als bei unbelegtem Fahrzeugsitz, da hier das Gewicht des Insassen den Elektromotor in seiner Abwärtsbewegung unterstützt.

Wird nun die Differenz der Stromaufnahme und insbesondere des Ruhestroms im Zeitintervall T1 und im Zeitintervall T2 gebildet, so ist das Differenzsignal als Gewichtssignal GEW insbesondere unabhängig von Nullpunkt- und Offsetfehlern der Steuer- und Auswerteschaltung 3. Ferner werden bei der Sitzverstellung zu überwindende Reibungskräfte infolge der Differenzbildung automatisch ausgemittelt. Das eigentlich zu ermittelnde Gewicht des Insassen oder des Objekts geht mit dem Faktor zwei in das Differenzsignal ein.

Gegebenenfalls kann auch der Anlaufstrom für die Berechnung eines Gewichtssignals GEW herangezogen werden.

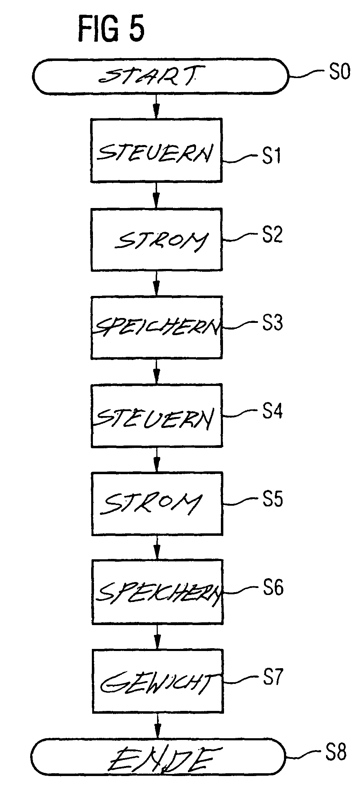

Figur 5 zeigt ein Ablaufdiagramm mit sequentiellen Verfahrensschritten für das erfindungsgemäße Verfahren zum Erkennen des Gewichts eines Gegenstandes und/oder eines Insassen auf einem Fahrzeugsitz. Nach Start mit Schritt S0 wird mit Schritt S1 der Elektromotor durch die Steuer- und Auswerteschaltung angesteuert. Während des Verstellbetriebs des Elektromotors wird mit Schritt S2 der von dem Elektromotor aufgenommene Verstellstrom ermittelt und mit Schritt S3 in einen Speicher der Steuer- und Auswerteschaltung abgelegt. Nach dem Abschalten des Elektromotors wird im Schritt S4 ein Steuersignal an den Elektromotor geliefert, das ein Verstellen des Fahrzeugsitzes in entgegengesetzter Richtung bewirkt. Mit Schritt S5 wird wiederum die Stromaufnahme des Elektromotors gemessen. Mit Schritt S6 wird diese ermittelte Stromaufnahme in einem Speicher der Steuer- und Auswerteschaltung abgelegt, bevor mit Schritt S7 aus den abgelegten Stromwerten die auf den Fahrzeugsitz einwirkende Gewichtskraft ermittelt wird. Mit Schritt S8 wird das Verfahren beendet.

## Patentansprüche

1. Vorrichtung zum Erkennen des Gewichts eines Gegenstandes und/oder eines Insassen auf einem Fahrzeugsitz, enthaltend:
- einen Fahrzeugsitz (1),
- einen steuerbaren Elektromotor (2) zum Verstellen des Fahrzeugsitzes (1),
- einen Sensor (4) zur Aufnahme einer Meßgröße, die abhängt von der vom Elektromotor gelieferten Kraft, und
- eine Steuer- und Auswerteschaltung (3), die aus der beim gesteuerten Verstellen des Fahrzeugsitzes (1) aufgenommenen Meßgröße ein Gewichtssignal (GEW) ableitet.

2. Vorrichtung nach Anspruch 1, bei der der Sensor (4) die Stromaufnahme des Elektromotors (2) aufnimmt aus dem beim gesteuerten Verstellen des Fahrzeugsitzes (1) aufgenommenen Strom (i_{E}) ein Gewichtssignal (GEW) durch die Steuer- und Auswerteschaltung (3) abgeleitet wird.

3. Vorrichtung nach Anspruch 1, bei der der Sensor (4) die Drehzahl des Elektromotors (2) aufnimmt und aus der beim gesteuerten Verstellen des Fahrzeugsitzes (1) aufgenommenen Drehzahl ein Gewichtssignal (GEW) durch die Steuer- und Auswerteschaltung (3) abgeleitet wird.

4. Vorrichtung nach Anspruch 1, bei der der Sensor (4) das Drehmoment des Elektromotors (2) aufnimmt und aus dem beim gesteuerten Verstellen des Fahrzeugsitzes (1) aufgenommenen Drehmoment ein Gewichtssignal (GEW) durch die Steuer- und Auswerteschaltung (3) abgeleitet wird.

5. Vorrichtung nach einem der vorhergehenden Ansprüche, bei der der Elektromotor (2) zum Verstellen des Fahrzeugsitzes (1) in seiner Höhe vorgesehen ist.

6. Vorrichtung nach Anspruch 2, bei der das Gewichtssignal (GEW) aus dem eingeschwungenen Betriebsstrom abgeleitet wird.

7. Vorrichtung nach einem der vorhergehenden Ansprüche, bei der das Gewichtssignal (GEW) aus der Differenz abgeleitet wird zwischen der Meßgröße (i_{EA}), die beim gesteuerten Verstellen des Fahrzeugsitzes (1) in eine erste Richtung aufgenommen wird, und der Meßgröße (i_{ER}), die beim gesteuerten Verstellen des Fahrzeugsitzes (1) in eine zur ersten Richtung entgegengesetzte Richtung aufgenommen wird.

8. Vorrichtung nach Anspruch 2 und Anspruch 7, bei der zur Ermittlung des Gewichtssignals (GEW) jeweils der eingeschwungene Betriebsstrom verwendet wird.

9. Steuervorrichtung für ein Insassenschutzmittel eines Kraftfahrzeugs, mit einer Vorrichtung zur Gewichtserkennung nach einem der vorhergehenden Ansprüche, bei der zumindest in Abhängigkeit des von der Vorrichtung zur Gewichtserkennung gelieferten Gewichtssignals (GEW) ein beabsichtigtes Auslösen des Insassenschutzmittels verhindert oder ein dosiertes Auslösen des Insassenschutzmittels eingeleitet wird.

10. Verfahren zum Erkennen des Gewichts eines Gegenstandes und/oder eines Insassen auf einem Fahrzeugsitz,
bei dem der Fahrzeugsitz durch einen Elektromotor verstellt wird,
bei dem eine Meßgröße aufgenommen wird, die abhängt von der von dem Elektromotor gelieferten Kraft (1), und
bei dem aus der beim Verstellen des Fahrzeugsitzes (1) aufgenommenen Meßgröße (i_{E}) ein Gewichtssignal (GEW) abgeleitet wird.

11. Verfahren nach Anspruch 10, bei dem das Gewichtssignal aus der Differenz abgeleitet wird zwischen der Meßgröße (i_{EA}), die beim gesteuerten Verstellen des Fahrzeugsitzes (1) eine erste Richtung aufgenommen wird, und der Meßgröße (i_{ER}), die beim gesteuerten Verstellen des Fahrzeugsitzes (1) in eine zur ersten Richtung entgegengesetzte Richtung aufgenommen wird.

## Claims

1. Device for detecting the weight of an object and/or an occupant on a vehicle seat, including:
- a vehicle seat (1),
- a controllable electric motor (2) for adjusting the vehicle seat (1),
- a sensor (4) for registering a measured variable which depends on the force supplied by the electric motor, and,
- a control and evaluation circuit (3) which derives a weight signal (GEW) from the measured variable registered during the controlled adjustment of the vehicle seat (1).

2. Device according to Claim 1, in which the sensor (4) registers the current consumption of the electric motor (2) and a weight signal (GEW) is derived by the control and evaluation circuit (3) from the current (i_{E}) registered during the controlled adjustment of the vehicle seat (1).

3. Device according to Claim 1, in which the sensor (4) registers the rotational speed of the electric motor (2) and a weight signal (GEW) is derived by the control and evaluation circuit (3) from the rotational speed registered during the controlled adjustment of the vehicle seat (1).

4. Device according to Claim 1, in which the sensor (4) registers the torque of the electric motor (2) and a weight signal (GEW) is derived by the control and evaluation circuit (3) from the torque registered during the controlled adjustment of the vehicle seat (1).

5. Device according to one of the preceding claims, in which the electric motor (2) is provided to adjust the height of the vehicle seat (1).

6. Device according to Claim 2, in which the weight signal (GEW) is derived from the steady-state operating current.

7. Device according to one of the preceding claims, in which the weight signal (GEW) is derived from the difference between the measured variable (i_{EA}) which is registered during the controlled adjustment of the vehicle seat (1) in a first direction and the measured variable (i_{ER}) which is registered during the controlled adjustment of the vehicle seat (1) in a direction opposite to the first direction.

8. Device according to Claim 2 and Claim 7, in which in each case the steady-state operating current is used to determine the weight signal (GEW).

9. Control device for an occupant protection means in a motor vehicle, having a device for detecting the weight according to one of the preceding claims, in which intentional triggering of the occupant protection means is prevented or the measured triggering of the occupant protection means is initiated at least as a function of the weight signal (GEW) supplied by the device for detecting the weight.

10. Method of detecting the weight of an object and/or an occupant on a vehicle seat,
in which the vehicle seat is adjusted by an electric motor,
in which a measured variable is registered which depends on the force supplied by the electric motor, and in which a weight signal (GEW) is derived from the measured variable (i_{E}) registered during the adjustment of the vehicle seat (1).

11. Method according to Claim 10, in which the weight signal is derived from the difference between the measured variable (i_{EA}) which is registered during the controlled adjustment of the vehicle seat (1) in a first direction and the measured variable (i_{ER}) which is registered during the controlled adjustment of the vehicle seat (1) in a direction opposite to the first direction.

## Revendications

1. Dispositif de détection du poids d'un objet et/ou d'un occupant se trouvant sur un siège de véhicule automobile, comprenant :
- un siège (1) de véhicule,
- un moteur (2) électrique pouvant être commandé et destiné à déplacer le siège (1) du véhicule automobile,
- un capteur (4) d'enregistrement d'une grandeur de mesure, qui dépend de la force fournie par le moteur électrique, et
- un circuit (3) de commande et d'exploitation, qui déduit un signal (GEW) de poids, de la grandeur de mesure enregistrée lors du déplacement commandé du siège (1) de véhicule automobile.

2. Dispositif suivant la revendication 1, dans lequel le capteur (4) enregistre l'absorption de courant du moteur (2) électrique et, par le circuit (3) de commande et d'exploitation, il est déduit du courant (i_{E}), enregistré lors du déplacement commandé du siège (1) du véhicule automobile, un signal (GEW) de poids.

3. Dispositif suivant la revendication 1, dans lequel le capteur (4) enregistre la vitesse de rotation du moteur (2) électrique et, par le circuit (3) de commande et d'exploitation, il est déduit de la vitesse de rotation, enregistrée lors du déplacement commandé du siège (1) de véhicule automobile, un signal (GEW) de poids.

4. Dispositif suivant la revendication 1, dans lequel le capteur (4) enregistre le couple de rotation du moteur (2) électrique et, par le circuit (3) de commande et d'exploitation, il est déduit du couple de rotation, enregistré lors du déplacement commandé du siège (1) de véhicule automobile, un signal (GEW) de poids.

5. Dispositif suivant l'une des revendications précédentes, dans lequel le moteur (2) électrique est prévu pour le réglage du siège (1) de véhicule automobile, en hauteur.

6. Dispositif suivant la revendication 2, dans lequel le signal (GEW) de poids est déduit du courant de fonctionnement permanent.

7. Dispositif suivant l'une des revendications précédentes, dans lequel le signal (GEW) de poids est déduit de la différence entre la grandeur (i_{EA}) de mesure, qui est enregistrée lors du déplacement commandé du siège (1) de véhicule automobile dans une première direction, et la grandeur (i_{ER}) de mesure, qui est enregistrée lors du déplacement commandé du siège (1) de véhicule automobile, dans une direction opposée à la première direction.

8. Dispositif suivant la revendication 2 et la revendication 7, dans lequel il est utilisé pour déterminer le signal (GEW) de poids, respectivement, le courant de fonctionnement permanent.

9. Dispositif de commande d'un moyen de protection d'un occupant d'un véhicule automobile, comprenant un dispositif de détection du poids sur l'une des revendications précédentes, dans lequel tout déclenchement délibéré du moyen de protection de l'occupant est empêché ou un déclenchement dosé du moyen de protection de l'occupant est effectué, au moins en fonction du signal (GEW) de poids fourni par le dispositif de détection du poids.

10. Procédé de détection du poids d'un objet et/ou d'un occupant se trouvant sur un siège de véhicule automobile qui consiste,
à déplacer le siège du véhicule par un moteur électrique,
à enregistrer une grandeur de mesure, qui dépend de la force (1) fournie par le moteur électrique, et
à déduire un signal (GEW) de poids de la grandeur (i_{E}) de mesure enregistrée lors du déplacement du siège (1) du véhicule automobile.

11. Procédé suivant la revendication 10, qui consiste à déduire le signal de poids de la différence, entre la grandeur (i_{EA}) de mesure, qui est enregistrée lors du déplacement commandé du siège (1) de véhicule automobile dans une première direction, et de la grandeur (i_{ER}) de mesure, qui est enregistrée lors du déplacement commandé du siège (1) de véhicule automobile, dans une direction opposée à la première direction.
